# EUROPÄISCHE PATENTSCHRIFT

(11) **EP 1 616 647 B1**
(45) Veröffentlichungstag und Bekanntmachung des Hinweises auf die Patenterteilung: **12.09.2007**
(21) Anmeldenummer: 05014354.4
(22) Anmeldetag: 01.07.2005
(51) Int. Cl.: B23B 31/20

(54) **Spannzangenfutter**
Collet chuck
Mandrin à pince

(30) Priorität: 08.07.2004 DE 202004010714 U
(43) Veröffentlichungstag der Anmeldung: 18.01.2006
(73) Patentinhaber: Eugen Fahrion GmbH & Co., 73667 Kaisersbach (DE)
(72) Erfinder: Fahrion, Ulrich, 73667 Kaisersbach (DE)
(74) Vertreter: Dreiss, Uwe

(56) Entgegenhaltungen:
- EP-A- 1 380 373
- DE-A1- 4 101 438
- DE-U1- 8 325 659

## Beschreibung

Die Erfindung betrifft ein Spannzangenfutter für Spannzangen, wie es im Oberbegriff des Schutzanspruchs 1 angegeben ist.

Eine Spannzange, wie sie in einem solchen Spannzangenfutter gespannt werden soll, ist durch DIN (Deutsche Industrie Norm) 6499 vorgegeben. Diese Norm definiert eine Form A und eine Form B. Diese Spannzange nach Form B hat sich heute weitgehend durchgesetzt, weil man damit auch Werkzeuge (Bohrer, Fräser, Reibahlen, Halterungsschäfte für Schleifscheiben etc.) spannen kann, die von dem jeweils vorgegebenen Nenndurchmesser abweichen. Man kann also beispielsweise mit einer Spannzange, die für einen Nenndurchmesser von 10 mm ausgelegt ist, auch Bohrer mit einem Durchmesser von 9 mm spannen. Man spricht dann von einer Spannüberbrückung von 1 mm.

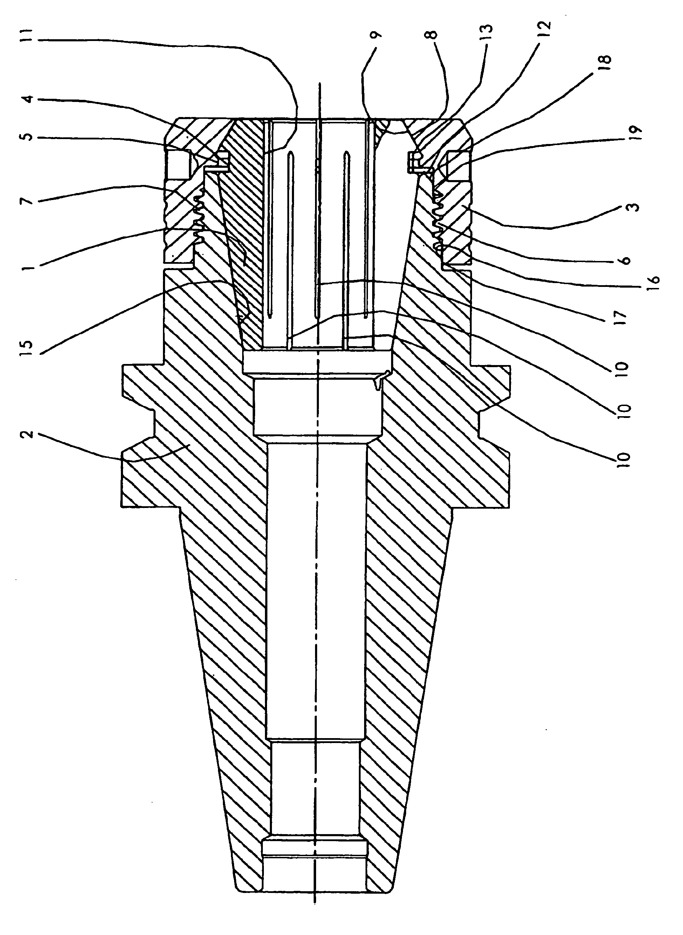

Ein Nachteil dieser Spannzangen (Form B) ist jedoch, dass sie bei Verwendung eines Werkzeuges mit Nenndurchmesser aus dem ebenfalls genormten Spannzangenfutter etwas hervorstehen (sowie z.B. bei der DE 42 09 485 C2; vgl. dort z.B. in Figur 1 die linke, von vorne "hintere" Begrenzungsfläche der Ringnut 10, bezogen auf die Stirnfläche des Spannzangenfutters 5; siehe ferner DE 92 05 838 U1). Dies vermindert die radiale Steifigkeit der Spannzangen, zumal die Spannzangen, um die Überbrückung zu gewährleisten, so geschlitzt sind, dass sie in radialer Richtung sehr "weich", d.h. elastisch sind (vgl. DIN 6499, S. 2 Bild unten rechts). Daraus ergeben sich Probleme hinsichtlich des Rundlaufs. Die Ungenauigkeit des Rundlaufs der Werkzeuge liegt im Bereich von 10 - 20 p. Außerdem führt eine, wenn auch nur geringfügige Schräglage der Spannmutter, mit der im Spannzangenfutter die Spannzange mit Werkzeug gespannt wird, zum Taumeln des Werkzeugs.

Ein Spannzangenfutter, wie es im Oberbegriff des Patentanspruches 1 angegeben ist, ist aus der DE 197 29 249 C2 und aus der DE 41 01 438 A1 bekannt.

Aufgabe der Erfindung ist es, den Rundlauf des eingespannten Werkzeugs, die radiale Steifigkeit der Einspannung eines Werkzeugs in die Spannzange, sowie der Einspannung der Spannzange im Spannzangenfutter weiter zu verbessern.

Dies erfolgt mit den Merkmalen des Patentanspruches 1. Vorteilhafte Weiterbildungen sind in den Unteransprüchen definiert.

Durch die erfindungsgemäß vorgesehenen Führungsflächen vor und hinter dem Gewinde wird das vordere Ende des Spannzangenfutters, das durch die konische Erweiterung geschwächt ist, beim Verschrauben des Spannzangenfutters mit der Spannzange mittels der Spannmutter in radialer Richtung stabilisiert. Die Führungsflächen verhindern, dass sich im Bereich der Verschraubung infolge der bei einem Gewinde stets vorhandenen und auch erforderlichen Toleranzen eine Verformung des Spannzangenfutters dadurch ergibt, dass die Spannzange und die Spannmutter beim Aufschrauben der Spannmutter tendenziell aufgeweitet werden. Die Verformung im Bereich des Gewindes wird vielmehr durch die zusammenwirkenden Führungsflächen begrenzt. Damit wird die radiale Steifigkeit der Spannzange beim Spannen eines Werkzeugs und damit sowohl der Rundlauf der Spannzange also auch demzufolge der Rundlauf des in der Spannzange gespannten Werkzeugs erheblich verbessert. Die oben geschilderten Nachteile werden vermieden. Dies gilt in verstärktem Maß, wenn gemäß einer vorteilhaften Weiterbildung der Erfindung ein 30°-Trapezgewinde (die Flanken haben einen Winkel von 30° zur Achse) verwendet werden. Diese Angaben gelten jeweils alle für den Nenndurchmesser.

Die Erfindung wird auch nicht durch die DE 83 25 659 U1 nahe gelegt, da die dort auf dem Außengewinde (12) einer Stellhülse (10) aufgeschraubte Stellmutter (20) zur Einstellung eines Längenmaßes (L) dient und ihrerseits durch eine radial in eine Gewindebohrung (26) eingeschraubte Schraube (27) fixiert wird. Dabei sollen die beidseitig der radialen Gewindebohrung (26) auf dem Außengewinde (12)der Stellhülse (10) vorgesehenen Passungsflächen (29, 30) eine Verbiegung der Stellhülse (10) durch die Schraube (27) verhindern.

Ein Ausführungsbeispiel der Erfindung wird im Folgenden anhand der einzigen beigefügten Zeichnung näher beschrieben.

Die Spannzange 1 ist im Spannzangenfutter 2 aufgenommen. Das Spannzangenfutter 2 ist seinerseits in einer Maschinenspindel (nicht gezeigt) aufgenommen. Auf eine detaillierte Beschreibung der Spannzange kann verzichtet werden, da diese in der DIN 6499, Form B beschrieben ist.

Die Spannzange 1 wird im Spannzangenfutter 2 durch eine Spannmutter 3 gespannt. Die Spannzange 1 weist eine Nut 4 auf, in die ein innen an der Spannmutter 3 vorgesehener Ring 5 eingesetzt wird. Sie ist mit mäanderförmig angeordneten axialen Schlitzen 10 versehen. Die Spannzange 1 wird in den Ring 5 eingedrückt, was durch die nachgiebige Ausbildung, die durch die Schlitze 10 gegeben ist, möglich ist. Die Spannmutter 3 ist mit einem Innengewinde 6, das Spannzangenfutter 2 mit einem Außengewinde 7 versehen. Dabei werden Trapezgewinde mit 30°-Flankenwinkel verwendet, um die für das Funktionieren der Gewinde erforderlichen Toleranzen möglichst gering zu halten. Beim Verschrauben drückt die konische Spannfläche 8 der Spannmutter 3 auf die konische Spannfläche 9 der Spannzange 1 und spannt damit die Spannzange 1 im Spannzangenfutter 2. Die Spannzange 1 wird dabei radial zusammengepresst. Dadurch wird ein in der Bohrung 11 der Spannzange 1 aufgenommener Schaft eines Werkzeugs (nicht gezeigt) gespannt.

Das Spannzangenfutter 2 wird nun - abweichend von der oben genannten Norm - so dimensioniert, dass seine vordere Stirnkante 12 bei Verwendung eines Werkzeugs mit Nenndurchmesser bündig mit der - von der offenen Seite der Durchgangsbohrung 11 her betrachtet - hinteren radialen Begrenzungsfläche 13 der Nut 4 abschließt. Dadurch wird die gesamte hintere konische Spannfläche 15 der Spannzange 1, die gemäß der genannten Norm gegenüber ihrer Achse einen Winkel von 8° aufweist, von dem vorderen Ende des Spannzangenfutters 2 überdeckt. Damit wird - bei einem Werkzeug mit Nenndurchmesser - eine weitest mögliche Anlage des Spannzangenfutters 2 an der Spannzange 1 erzielt. Um eine Verbesserung der radialen Spannung von Spannzange und Werkzeug im Spannzangenfutter zu erreichen, sind nun außen am Spannzangenfutter 2 zwei in axialer Richtung verlaufende weitere Führungsflächen 16 und 18 und zwar vor und hinter dem Gewinde 6, 7 - also beidseitig desselben - vorgesehen, denen korrespondierende Führungsflächen 17 und 19 innen an der Spannmutter 3 zugeordnet sind. Diese Führungsflächen bilden einen radialen Anschlag für das die Führungsflächen 16 und 18 am vorderen Ende des Spannzangenfutters beim Aufschrauben der Spannmutter 3, so dass eine Aufweitung des Spannzangenfutters 2 über diesen Anschlag hinaus nicht erfolgen kann, wenn die Spannzange 1 in das Spannzangenfutter 2 beim Anziehen hineingezogen wird. Durch diese Führungsflächen wird also das vordere Ende des Spannzangenfutters 2, das durch die konische Erweiterung geschwächt ist, gegen unrunden Lauf gesichert, was insbesondere bei hohen Drehzahlen, wie sie heute angestrebt werden, von großer Bedeutung ist.

Durch die Verwendung eines Trapezgewindes mit einem Flankenwinkel von 30° für die Gewinde 6 und 7 wird die präzise Spannung verbessert.

Ergänzend sei darauf hingewiesen, dass die Erfindung genormte Spannzangen verwendet, die an sich durch die mäanderförmige Ausbildung der Schlitze und die dadurch bewirkte "Weichheit" in radialer Richtung zur Spannüberbrückung, also auch für vom Nenndurchmesser abweichende Durchmesser, einsetzbar sind. Die Erfindung schafft für diese Spannzangen ein Spannzangenfutter, bei dem unter Verzicht auf die genannte Spannüberbrückung - also für Spannzangen, in denen Werkzeuge mit Nenndurchmesser gespannt werden - diese Spannzange stabilisiert und damit der Rundlauf verbessert wird.

## Patentansprüche

1. Spannzangenfutter zur Aufnahme einer Spannzange (1), die mehrere Längsschlitze (10), eine Durchgangsbohrung (11) und eine Nut (4) aufweist, und in dem die Spannzange (1) durch eine Spannmutter (3) gespannt wird, die mittels eines Gewindes (6, 7) auf das vordere Ende des Spannzangenfutters (2) aufschraubbar ist, und bei der das vordere Ende (12) des Spannzangenfutters (2) mit der hinteren konischen Begrenzungsfläche (13) der Nut (4) bündig abschließt, **dadurch gekennzeichnet, dass** das Spannzangenfutter (2) auf seiner Außenseite sowohl vor als auch hinter dem Gewinde (6, 7), das zum Aufschrauben der Spannmutter (3) dient, je eine Führungsfläche (16, 18) aufweist, die jeweils mit einer zugeordneten Führungsfläche (17, 19) auf der Innenseite der Spannmutter (3) zusammenwirkt.

2. Spannzangenfutter nach Anspruch 1, **dadurch gekennzeichnet, dass** die zur Aufnahme bestimmte Spannzange eine Spannzange (1) nach DIN 6499 Form B mit einer Spannüberbrückung von 0,5 mm oder mehr ist.

3. Spannzangenfutter nach Anspruch 1, **dadurch gekennzeichnet, dass** die zur Aufnahme bestimmte Spannzange eine an sich bekannte Spannzange mit mäanderförmig angeordneten Schlitzen (10) ist.

4. Spannzangenfutter nach einem der Ansprüche 1 bis 3, **dadurch gekennzeichnet, dass** das zum Aufschrauben der Spannmutter (3) auf das Spannzangenfutter (2) vorgesehene Gewinde ein 30°-Trapezgewinde ist.

## Claims

1. A collet chuck for receiving a collet (1), which has several longitudinal slots (10), a through bore hole (11), and a groove (4), and in which the collet (1) is biased by an adjusting nut (3), which can be screwed onto the forward end of the collet chuck (2) by means of a thread (6, 7), and in which the forward end (12) of the collet chuck (2) terminates flush with the rear, conical border surface (13) of the groove (4), wherein the collet chuck (2) on its exterior side has a guide surface (16, 18) both before and after the thread (6, 7), which functions to screw and unscrew the adjusting nut (3), each guide surface cooperating with an assigned guide surface (17, 19) on the interior side of the adjusting nut (3).

2. The collet chuck as recited in Claim 1, wherein the collet that is designed for receiving is a collet (1) in accordance with DIN 6499 Form B, having a bridging of 0.5 mm or more.

3. The collet chuck as recited in Claim 1, wherein the collet that is designed for receiving is a generally familiar collet having meander-shaped slots (10).

4. The collet chuck as recited in any of Claims 1 to 3, wherein the thread that is provided for screwing and unscrewing the adjusting nut (3) onto the collet chuck is a 30° trapezoidal thread.

## Revendications

1. Mandrin à pince de serrage destiné à recevoir une pince de serrage (1), qui comporte plusieurs fentes longitudinales (10), une forure débouchante (11) et une rainure (4), et dans lequel la pince de serrage (1) est serrée par un écrou de serrage (3), qui est vissé au moyen d'un filetage (6, 7) sur l'extrémité avant du mandrin (2), et dans lequel l'extrémité avant (12) du mandrin (2) est située à fleur de la surface de délimitation (13) conique arrière de la rainure (4), **caractérisé en ce que** le mandrin (2) comporte, sur sa face extérieure, devant et derrière le filetage (6, 7) qui est prévu pour le vissage de l'écrou de serrage (3), respectivement une surface de guidage (16, 18), dont chacune coopère avec une surface de guidage (17, 19) associée sur la face intérieure de l'écrou de serrage (3).

2. Mandrin à pince de serrage selon la revendication 1, **caractérisé en ce que** la pince de serrage destinée à être reçue dans celui-ci est une pince de serrage (1) selon DIN 6499 forme B, avec une distance de serrage de 0,5 mm ou plus.

3. Mandrin à pince de serrage selon la revendication 1, **caractérisé en ce que** la pince de serrage destinée à être reçue dans celui-ci est une pince de serrage connue en soi avec des fentes (10) agencées en forme de méandres.

4. Mandrin à pince de serrage selon l'une quelconque des revendications 1 à 3, **caractérisé en ce que** le filetage prévu pour le vissage de l'écrou de serrage (3) sur le mandrin (2) est un filet trapézoïdal à 30°.
